(19) Europäisches Patentamt
European Patent Office
Office européen des brevets

(11) **EP 2 400 504 A1**

(12) **EUROPEAN PATENT APPLICATION**
published in accordance with Art. 153(4) EPC

(43) Date of publication:
**28.12.2011 Bulletin 2011/52**

(51) Int Cl.:
***G21C 17/00*** *(2006.01)*    ***G21C 7/08*** *(2006.01)*

(21) Application number: **10743822.8**

(22) Date of filing: **18.02.2010**

(86) International application number:
**PCT/JP2010/052474**

(87) International publication number:
**WO 2010/095696 (26.08.2010 Gazette 2010/34)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.02.2009 JP 2009038136**

(71) Applicant: **Mitsubishi Heavy Industries, Ltd. Tokyo 108-8215 (JP)**

(72) Inventors:
• **KAUCHI, Masayuki**
 **Minato-ku,**
 **Tokyo 108-8215 (JP)**

• **NAGAI, Masatoshi**
 **1.1,Wadasaki-cho 1-chome,**
 **Hyogo-ku, Kobe,Hyogo-ken**
 **652-8585 (JP)**

(74) Representative: **Intès, Didier Gérard André et al Cabinet Beau de Loménie**
 **158, rue de l'Université**
 **75340 Paris Cedex 07 (FR)**

(54) **AXIAL OUTPUT DISTRIBUTION CONTROL METHOD AND AXIAL OUTPUT DISTRIBUTION CONTROL AUXILIARY DEVICE**

(57)    Parameters $DAO_{PX}$ (=$AO_P$-$AO_X$) and $DAO_{IX}$ (=$AO_I$-$AO_X$) are calculated based on axial offsets of the power distribution ($AO_X$ and $AO_I$). A movement control of a control rod is then performed in such a manner that a plot point of a trajectory of the parameter $DAO_{PX}$ and the $DAO_{IX}$ is induced toward the major axis of an ellipse drawn by the trajectory, based on the parameters ($DAO_{PX}$ and $DAO_{IX}$) and allowable ranges ($DAO_{PX\_}L$ and $DAO_{IX\_}L$) obtained in advance. With this configuration, the xenon oscillation is suppressed by controlling the xenon oscillation in a simultaneous manner simply by controlling an axial power distribution in a reactor by a simple operation with a clear purpose.

FIG.1

**Description**

Field

The present invention relates to a technique of controlling an axial power distribution of a nuclear reactor, and more particularly relates to a technique of preventing a xenon oscillation that can be generated in a pressurized water reactor.

Background

It is widely known that a xenon oscillation could occur in the pressurized water reactor (PWR). The xenon oscillation is observed in the form of spatial oscillation of power distributions due to variations in spatial xenon concentration distribution. Xenon is a fission product from nuclear fission and has a high neutron absorption capability.

Xenon oscillation involves significant power distribution distortion in a nuclear reactor and may cause excessive local power, resulting in the local temperature rises. In order to ensure the safety of the core, xenon oscillation must be suppressed within a range of safe plant operation.

One of the technologies for preventing the above-mentioned excessive distortion of power distribution is known as "Power Distribution Control Method" for keeping axial power distribution within a prescribed range. For example, the Constant Axial Offset Control Method controls an axial offset (AO) within an allowable range which is determined based on the target-AO. Where, the AO is defined as a fraction of the power difference in the upper and lower halves of the core, and the target-AO is defined as the AO at which the core power is stable with control rods being almost totally withdrawn. In operation, it is monitored whether AO (or a value calculated by multiplying AO by the relative power when the core is at partial power) is within the allowable range, and if AO is out of the allowable range, the control rods can immediately guide AO back to the allowable range (Patent Document 1, Non-Patent Document 1).

In addition, this inventor also invented a xenon oscillation control method described in Japanese Patent No. 3202430 (Patent Document 2, Non-Patent Document 2, Non-Patent Document 3). The xenon oscillation control method employs an axial offset of the current power distribution ($AO_P$) in a nuclear reactor core, an axial offset of the power distribution which would give the current xenon distribution under equilibrium condition (xenon-corresponding axial offset of the current power distribution: $AO_X$) and an axial offset of the power distribution which would give the current iodine distribution under equilibrium condition (iodine-corresponding axial offset of the current power distribution: $AO_I$). Xenon oscillation can be suppressed by inserting or withdrawing control rods, so as to guide a trajectory to plot a parameter $DAO_{PX}$ (=$AO_P$-$AO_X$) on X axis and a parameter $DAO_{IX}$ (=$AO_I$-$AO_X$) on Y axis, to the origin of the coordinates.

Citation List

Patent Literatures

Patent Literature 1: Japanese Patent Application Laid-open No. 2000-121779
Patent Literature 2: Japanese Patent Publication No. 3202430

Non Patent Literatures

Non Patent Literature 1: "Load-following operation of PWR", The Thermal and Nuclear Power, Vol. 31, No. 2.

Non Patent Literature 2: "Optimum control method for axial-direction xenon oscillation of PWR based on online data processing of axial offset of the power distribution", Journal of The Atomic Energy Society of Japan, Vol. 33, No. 3.

Non Patent Literature 3: "Improvement on axial-offset trajectory method for xenon oscillation control in load-following operation", Journal of The Atomic Energy Society of Japan, Vol. 38, No. 1.

Summary

Technical Problem

Since the above conventional "Power Distribution Control Method" merely controls AO within an allowable range, this method is capable of preventing significant xenon oscillation, but may not be capable of suppressing xenon oscillation after it occurred. Consequently, additional technical measures must be taken to control xenon oscillation. The control of xenon oscillation exclusively depends on power distribution information, leading to various limited operating conditions, such as changes in allowable range in accordance with power value and making it difficult to efficiently operate a nuclear reactor.

Also, because the invention described in the above Patent Document 1 controls existing xenon oscillation in order to assuredly and efficiently suppress the same, this invention is not appropriate for power distribution control.

The present invention is invented in order to solve the above-mentioned problems. The objective of the present invention is to provide at least one of suppressing xenon oscillation by controlling xenon oscillation at the same time as controlling the axial power distribution inside the reactor core by an operation with simplicity and clear purpose and reliving work load for suppressing xenon oscillation.

MEANS FOR SOLVING THE PROBLEM

According to an aspect of the present invention, an axial power distribution control method includes: an axial offset calculation step of calculating an axial offset of the current power distribution, an axial offset of the power distribution which would give the current xenon distribution under equilibrium condition, and an axial offset of the power distribution which would give the current iodine distribution under equilibrium condition, using the following expressions (1) to (3) or (1)' to (3)', respectively, based on a relative power ($P_T$) in the upper half of the nuclear reactor core and a relative power ($P_B$) in the lower half of the nuclear reactor core; a parameter calculating step of calculating a xenon parameter represented by using a difference between the axial offset of the current power distribution and xenon-corresponding axial offset of the current power distribution during an operation of the reactor and an iodine parameter represented by using a difference between the iodine-corresponding axial offset of the current power distribution and the xenon-corresponding axial offset of the current power distribution during the operation of the reactor; and

a control rod moving step of controlling the movement of a control rod in such a manner that the xenon parameter and the iodine parameter move toward a major axis of an ellipse drawn by the xenon parameter and the iodine parameter which are calculated in the parameter calculating step. In order to ensure the safety of the core, these calculations are based on required parameters such as, the allowable range of both the xenon parameter and the iodine parameter and the xenon parameter and the iodine parameter which are calculated in the parameter calculating step.

Core axial offset of the current power distribution:

$$(P_T - P_B) \text{ or } (P_T - P_B)/(P_T + P_B) \cdots \text{ Expression (1)}$$

Xenon-corresponding core axial offset of the power distribution:

$$(P_{TX} - P_{BX}) \text{ or } (P_{TX} - P_{BX})/(P_{TX} + P_{BX}) \cdots \text{ Expression (2)}$$

Iodine-corresponding core axial offset of the power distribution:

$$(P_{TI} - P_{BI}) \text{ or } (P_{TI} - P_{BI})/(P_{TI} + P_{BI}) \cdots \text{ Expression (3)}$$

Core axial offset of the current power distribution:

$$(P_T-P_B)/(P_T+P_B) \cdots \text{Expression (1)}'$$

Xenon-corresponding core axial offset of the power distribution:

$$(P_{TX}-P_{BX})/(P_{TX}+P_{BX}) \cdots \text{Expression (2)}'$$

Iodine-corresponding core axial offset of the power distribution:

$$(P_{TI}-P_{BI})/(P_{TI}+P_{BI}) \cdots \text{Expression (3)}',$$

where

$P_{TX}$: relative power in the upper half of the core that would give the current xenon concentration under equilibrium condition,
$P_{BX}$: relative power in the lower half of the core that would give the current xenon concentration under equilibrium condition,
$P_{TI}$: relative power in the upper half of the core that would give the current iodine concentration under equilibrium condition, and
$P_{BI}$: relative power in the lower half of the core that would give the current iodine concentration under equilibrium condition.

The present invention controls a movement of the control rod, based on parameters ($DAO_{PX}$ and $DAO_{IX}$) and their allowable ranges ($DAO_{PX\_L}$ and $DAO_{IX\_L}$), in such a manner that the latest values (plot point) of the parameters are induced toward the major axis of an ellipse drawn by a trajectory of the parameters. With this configuration, the xenon oscillation can be controlled in a simultaneous manner simply by controlling the axial power distribution in the reactor, by which the xenon oscillation is suppressed to a considerably low level in a rapid manner, and as a result, it is possible to achieve the safety on the reactor control in a reliable manner. At the same time, it is possible to reduce the load on operations to suppress the xenon oscillation. Furthermore, by comparing the parameters with their allowable ranges, timing for moving the control rod and an amount of moving the control rod are visually confirmed in an easy manner, by which the control rod can be operated simply and reliably, and as a result, it is possible to make a control plan considerably simple and clear. Moreover, by comparing the latest values of the parameters with their allowable ranges in a simultaneous manner, it is possible to move the control rod not only when the latest values of the parameters exceed the allowable ranges but also before the latest values exceed the allowable ranges. This makes it possible to suppress the xenon oscillation in a rapid manner even when the latest values of the parameters possibly exceed the allowable ranges.

Advantageously, the axial power distribution control method further includes a trajectory display step including, after the parameter calculating step and before the control-rod moving step, displaying an allowable range trajectory drawn by the allowable range of the xenon parameter and the allowable range of the iodine parameter on a display unit by setting the allowable range of the xenon parameter on one axis and the allowable range of the iodine parameter on other axis in a Cartesian coordinate system, and displaying a trajectory obtained by setting the xenon parameter calculated at the parameter calculating step on the one axis and the iodine parameter calculated at the parameter calculating step on the other axis on the display unit.

Advantageously, in the axial power distribution control method, the control-rod moving step includes performing a movement control of the control rod in such a manner that the xenon parameter and the iodine parameter move toward the major axis of the ellipse before at least one of the xenon parameter and the iodine parameter calculated at the parameter calculating step exceeds at least one of the allowable range of the xenon parameter and the allowable range of the iodine parameter.

Advantageously, in the axial power distribution control method, in a case where the allowable range of the xenon parameter is set on a horizontal axis of the Cartesian coordinate system and the allowable range of the iodine parameter is set on a vertical axis of the Cartesian coordinate system, the performing includes performing the movement control of the control rod in such a manner that the xenon parameter and the iodine parameter move toward the major axis of the ellipse upon the xenon parameter and the iodine parameter entering an area that is surrounded by the horizontal axis, the major axis of the ellipse, and the allowable range trajectory.

Advantageously, in the axial power distribution control method further includes an allowable range excess determination step of determining whether at least one of the xenon parameter and the iodine parameter calculated at the parameter calculating step exceeds at least one of the allowable range of the xenon parameter and the allowable range of the iodine parameter, before the control-rod moving step. When at least one of the xenon parameter and the iodine parameter exceeded at least one of the allowable range of the xenon parameter and the allowable range of the iodine parameter, the control-rod moving step includes performing the movement control of the control rod in such a manner that the xenon parameter and the iodine parameter move toward the major axis of the ellipse drawn by the xenon parameter and the iodine parameter.

Advantageously, the axial power distribution control method further includes a alarming step of alarming a result of determination, when it is determined that at least one of the xenon parameter and the iodine parameter exceeded at least one of the allowable range of the xenon parameter and the allowable range of the iodine parameter at the allowable range excess determination step.

According to another aspect of the present invention, an axial power distribution control supporting device includes: an axial offset calculation step of calculating an axial offset of the current power distribution, an axial offset of the power distribution which would give the current xenon distribution under equilibrium condition, and an axial offset of the power distribution which would give the current iodine distribution under equilibrium condition, using the following expressions (1) to (3) or (1)' to (3)', respectively, based on a relative power ($P_T$) in the upper half of the nuclear reactor core and a relative power ($P_B$) in the lower half of the nuclear reactor core; a parameter calculating step of calculating a xenon parameter represented by using a difference between the axial offset of the current power distribution and xenon-corresponding axial offset of the current power distribution during an operation of the reactor and an iodine parameter represented by using a difference between the iodine-corresponding axial offset of the current power distribution and the xenon-corresponding axial offset of the current power distribution during the operation of the reactor; and a control rod moving step of controlling the movement of a control rod in such a manner that the xenon parameter and the iodine parameter move toward a major axis of an ellipse drawn by the xenon parameter and the iodine parameter which are calculated in the parameter calculating step. In order to ensure the safety of the core, these calculations are based on required parameters such as, the allowable range of both the xenon parameter and the iodine parameter and the xenon parameter and the iodine parameter which are calculated in the parameter calculating step.

Core axial offset of the current power distribution:

$$(P_T - P_B) \text{ or } (P_T - P_B)/(P_T + P_B) \cdots \text{Expression (1)}$$

Xenon-corresponding core axial offset of the power distribution:

$$(P_{TX} - P_{BX}) \text{ or } (P_{TX} - P_{BX})/(P_{TX} + P_{BX}) \cdots \text{Expression (2)}$$

Iodine-corresponding core axial offset of the power distribution:

$$(P_{TI} - P_{BI}) \text{ or } (P_{TI} - P_{BI})/(P_{TI} + P_{BI}) \cdots \text{Expression (3)}$$

Core axial offset of the current power distribution:

$$(P_T - P_B)/(P_T + P_B) \cdots \text{Expression (1)'}$$

Xenon-corresponding core axial offset of the power distribution:

$$(P_{TX} - P_{BX}) / (P_{TX} + P_{BX}) \quad \cdots \text{Expression (2)}'$$

Iodine-corresponding core axial offset of the power distribution:

$$(P_{TI} - P_{BI}) / (P_{TI} + P_{BI}) \quad \cdots \text{Expression (3)}',$$

where

$P_{TX}$: relative power in the upper half of the core that would give the current xenon concentration under equilibrium condition,

$P_{BX}$: relative power in the lower half of the core that would give the current xenon concentration under equilibrium condition,

$P_{TI}$: relative power in the upper half of the core that would give the current iodine concentration under equilibrium condition, and

$P_{BI}$: relative power in the lower half of the core that would give the current iodine concentration under equilibrium condition.

The present invention displays, upon suppressing the xenon oscillation, the parameters ($DAO_{PX}$ and $DAO_{IX}$) and their allowable ranges ($DAO_{PX\_L}$ and $DAO_{IX\_L}$) on a display unit. The present invention then controls the control rod to move in such a manner that the latest values (plot point) of the parameters are induced toward the major axis of an ellipse drawn by a trajectory of the parameters. With this configuration, when suppressing the xenon oscillation, timing for moving the control rod and an amount of moving the control rod can be visually confirmed in an easy manner because the parameters and their allowable ranges displayed on the display unit can be compared with each other. As a result, because the control rod can be operated simply and reliably, it is possible to reduce the load on the operations to suppress the xenon oscillation and to make a control plan considerably simple and clear.

Advantageously, the axial power distribution control supporting device further includes a control-rod moving unit that performs a movement control of a control rod in such a manner that the xenon parameter and the iodine parameter move toward a major axis of an ellipse drawn by the xenon parameter and the iodine parameter, when it is determined that at least one of the xenon parameter and the iodine parameter calculated by the parameter calculation unit exceeds at least one of the allowable range of the xenon parameter and the allowable range of the iodine parameter required for ensuring the safety of the core.

Advantageous Effects of Invention

According to the present invention, it is possible to control a xenon oscillation in a simultaneous manner by simply controlling an axial power distribution in a reactor by a simple operation with a clear purpose and to suppress the xenon oscillation.

Brief Description of Drawings

FIG. 1 is a schematic diagram of an overall configuration of an axial power distribution control device according to an embodiment of the present invention and a reactor.

FIG. 2 depicts a plot trajectory when a xenon oscillation is stable in the embodiment.

FIG. 3 depicts a plot trajectory when a xenon oscillation is divergent in the embodiment.

FIG. 4 is a graph of an AOp during a xenon oscillation in the embodiment.

FIG. 5 depicts a plot trajectory of ($DAO_{PX}$, $DAO_{IX}$) corresponding to FIG. 4.

FIG. 6 is a flowchart of an axial power distribution control method according to the embodiment.

FIG. 7 depicts a plot trajectory of ($DAO_{PX}$, $DAO_{IX}$).

FIG. 8 depicts a plot trajectory of ($DAO_{PX\_L}$, $DAO_{IX\_L}$).

Description of Embodiments

Exemplary embodiments of the present invention will be explained below in detail with reference to the accompanying drawings. The present invention is not limited to the following mode for carrying out the invention (hereinafter, "embodiment"). In addition, constituent elements in the following embodiments include those that can be easily assumed by persons skilled in the art or that are substantially equivalent, which are socalled "equivalents".

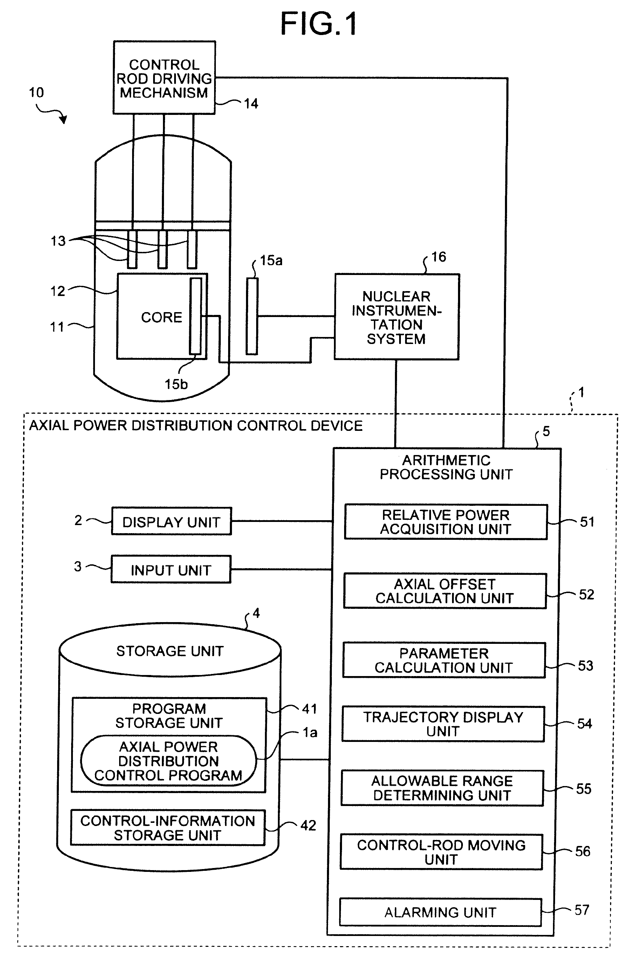

Figure 1 is a block diagram indicating overall structure of an axial power distribution control device 1 including an axial power distribution control program 1a of the present invention and a nuclear reactor 10 controlled by the axial power distribution control device 1. In this embodiment, the nuclear reactor 10 is a pressurized water reactor (PWR), comprising a pressure vessel 11, a reactor core 12 loaded in the pressure vessel 11, a control rod 13 which controls fission reaction in the reactor core 12, a control rod driving mechanism 14 which drives the control rod 13 vertically, an ex-core neutron flux detector 15a and a in-core neutron flux detector 15b located at corresponding upper and lower positions of the reactor core 12, and a nuclear instrumentation system 16 which calculates a relative power of the reactor core 12 based on detection readings on the ex-core neutron flux detector 15a and the in-core neutron flux detector 15b.

The reactor core 12 contains plural fuel rods as a nuclear fuel therein. The control rod 13 is driven by the control rod driving mechanism 14 which inserts or withdraws the control rod 13 from the reactor core 12. In this embodiment, "axial(ly)" corresponds to an axial direction of the reactor core 12, specifically a longitudinal direction of the fuel rods and a driving direction of the control rod 13. In this embodiment, axial xenon oscillation is described, because it is more commonly observed in an axial direction in the pressurized water reactor.

The control rod driving mechanism 14 is driven by the later-mentioned arithmetic processing unit 5 to drive the control rod 13 vertically. The ex-core neutron flux detectors 15a and 15b detect neutron fluxes released from upper and lower halves of the reactor core 12 to ex-core, respectively. The nuclear instrumentation system 16 calculates a relative power ($P_T$) of the upper half of the reactor core and a relative power ($P_B$) of the lower half of the reactor core, based on detection values on ex-core neutron flux detectors 15a and 15b. In this embodiment, a relative power is a value given by normalizing a rated power of the nuclear reactor 10 to 1.0.

The axial power distribution control device 1 of this embodiment, as shown in Figure 1, mainly comprises a display unit 2 composed of a liquid crystal display, an input unit 3 composed of a keyboard, a mouse, etc., a storage unit 4 which stores an axial power distribution control program 1a of this embodiment and other data and an arithmetic processing unit 5 which controls the constitutive means, acquires other data and performs arithmetic processing. The axial power distribution control device 1 also serves as an axial power distribution control supporting device that supports the axial power distribution control, as well as controls the axial power distribution of the reactor 10 to suppress the xenon oscillation.

The memory unit 4, included in the axial power distribution control device 1, comprising a hard disk and a random access memory (RAM), as shown in Figure 1, further comprises a program storage unit 41 and a control-information storage unit 42. Each component of the memory unit 4 will be described in more detail. The program storage unit 41 is provided with the axial power distribution control program 1a of this embodiment installed therein, which is executed by the arithmetic processing unit 5 to realize an axial power distribution control method of this embodiment.

The control-information storage unit 42 stores an allowable range with regard to the axial offset of the current power distribution in the reactor core 12 of the nuclear reactor 10 (hereinafter briefly called "$AO_P$"). The allowable range is determined according to characteristics of the reactor core 12 in accordance with safety analysis of the reactor core 12 to reduce negative effects of xenon oscillation introduced as an axial power of the reactor core 12 changes and to ensure the safety of the reactor core 12.

The arithmetic processing unit 5 included in the an axial power distribution control device 1 comprises central processing unit (CPU). As shown in FIG. 1, the arithmetic processing unit 5 comprises a relative power acquisition unit 51, an axial offset calculation unit 52, a parameter calculation unit 53, a trajectory display unit 54, the allowable range determining unit 55, a control-rod moving unit 56, and an alarming unit 57. The arithmetic processing 5 executes the axial power distribution control of the reactor 10 by executing the axial power distribution control program 1a installed in the program storage unit 41.

That is, by the arithmetic processing unit 5 reading and executing the axial power distribution control program 1a, functions of the relative power acquisition unit 51, the axial offset calculation unit 52, the parameter calculation unit 53, the trajectory display unit 54, the allowable range determining unit 55, the control-rod moving unit 56, and the alarming unit 57 are realized. Meanwhile, in order for the axial power distribution control device 1 to realize a function of the axial power distribution control supporting device according to the present embodiment, it suffices with at least the axial offset calculation unit 52, the parameter calculation unit 53, and the trajectory display unit 54.

Each component of the arithmetic processing unit 5 will be described in more detail. The relative power acquisition unit 51 acquires relative powers $P_T$ and $P_B$ in upper and lower regions of the reactor core 12. In this embodiment, the relative power acquisition unit 51 acquires relative powers $P_T$ and $P_B$ from the nuclear instrumentation system 16 at a specified time interval to provide them to the axial offset calculation unit 52.

The axial offset calculation unit 52 calculates the above-mentioned $AO_P$, an axial offset of the power distribution which would give the current xenon distribution under equilibrium condition (xenon-corresponding core axial offset of the power distribution), and an axial offset of the power distribution which would give the current iodine distribution under equilibrium condition (iodine-corresponding core axial offset of the power distribution).

The axial offset calculation unit 52 acquires relative powers $P_T$ and $P_B$ from the relative power acquisition unit 51 to calculate the core axial offset of the power distribution, the xenon-corresponding axial offset of the power distribution, and the iodine-corresponding axial offset of the power distribution from the following expressions (1) to (3) or (1)' to (3)', respectively. The expressions (1) to (3) are for calculating differences between the relative powers $P_T$ and $P_B$, relative powers $P_{TX}$ and $P_{BX}$ for the xenon concentration, and relative powers $P_{TI}$ and $P_{BI}$ for the iodine concentration, respectively, and the expressions (1)' to (3)' are for calculating values obtained by dividing the expressions (1) to (3) by a total core relative powers

$$P = (P_T + P_B) = (P_{TX} + P_{BX}) = (P_{TI} + P_{BI}).$$

Core axial offset of the power distribution:

$$(P_T - P_B) = \Delta I, \quad \text{or} \quad (P_T - P_B)/(P_T + P_B) \quad \cdots \quad \text{Expression (1)}$$

Xenon-corresponding core axial offset of the power distribution:

$$(P_{TX} - P_{BX}), \quad \text{or} \quad (P_{TX} - P_{BX})/(P_{TX} + P_{BX}) \quad \cdots \quad \text{Expression (2)}$$

Iodine-corresponding core axial offset of the power distribution:

$$(P_{TI} - P_{BI})), \quad \text{or} \quad (P_{TI} - P_{BI})/(P_{TI} + P_{BI}) \quad \cdots \quad \text{Expression (3)}$$

Core axial offset of the power distribution:

$$(P_T - P_B)/(P_T + P_B) = AO_P \quad \cdots \quad \text{Expression (1)'}$$

Xenon-corresponding core axial offset of the power distribution:

$$(P_{TX} - P_{BX})/(P_{TX} + P_{BX}) = AO_X \quad \cdots \quad \text{Expression (2)'}$$

Iodine-corresponding core axial offset of the power distribution:

$$(P_{TI} - P_{BI})/(P_{TI} + P_{BI}) = AO_I \quad \cdots \quad \text{Expression (3)'},$$

where

$P_{TX}$: relative power in the upper half of the core that would give the current xenon concentration under equilibrium condition,

$P_{BX}$: relative power in the lower half of the core that would give the current xenon concentration under equilibrium condition,

$P_{TI}$: relative power in the upper half of the core that would give the current iodine concentration under equilibrium condition, and

$P_{BI}$: relative power in the lower half of the core that would give the current iodine concentration under equilibrium condition.

Here, methods for calculating $AO_X$ and $AO_I$ will be described in more detail. Changes in average xenon concentrations $X_T$ and $X_B$ in the upper half of the reactor core and the lower half of the reactor core are calculated according to the following Expressions (4) and (5), respectively, by the axial offset calculation unit 52.

$$dX_T/dt = y_x \Sigma_f \phi_0 P_T + \lambda_I I_T - (\sigma_a \phi_0 P_T + \lambda_X) X_T \quad \cdots \quad \text{Expression (4)}$$

$$dX_B/dt = y_x \Sigma_f \phi_0 P_B + \lambda_I I_B - (\sigma_a \phi_0 P_B + \lambda_X) X_B \quad \cdots \quad \text{Expression (5)}$$

Changes in average iodine concentrations $I_T$ and $I_B$ in the upper half of the reactor core and the lower half of the reactor core are calculated according to the following Expressions (6) and (7), respectively.

$$dI_T/dt = y_I \Sigma_f \phi_0 P_T - \lambda_I I_T \quad \cdots \quad \text{Expression (6)}$$

$$dI_B/dt = y_I \Sigma_f \phi_0 P_B - \lambda_I I_B \quad \cdots \quad \text{Expression (7),}$$

where

$y_x$ and $y_I$: xenon and iodine yields from nuclear fission,
$\lambda_X$ and $\lambda_I$: decay constant of xenon and iodine,
$\Sigma_f$: macroscopic nuclear fission cross section,
$\sigma_a$: microscopic absorption cross section of xenon, and
$\phi_0$: mean neutron flux with rated power.

Average xenon concentrations $X_T$ and $X_B$, and average iodine concentrations $I_T$ and $I_B$ in the upper half of the reactor core and the lower half of the reactor core are calculated by integrating the above Expressions (4) to (7) by the axial offset calculation unit 52. Meanwhile, xenon concentrations $X_T^{Eq}$ and $X_B^{Eq}$ under equilibrium condition are calculated using relative powers $P_T^{Eq}$ and $P_B^{Eq}$ under equilibrium condition in the upper and lower halves of the reactor core using the following Expressions (8) and (9).

$$X_T^{Eq} = (y_I + y_x) \Sigma_f \phi_0 P_T^{Eq} / (\sigma_a \phi_0 P_T^{Eq} + \lambda_X) \quad \cdots \quad \text{Expression (8)}$$

$$X_B^{Eq} = (y_I + y_x) \Sigma_f \phi_0 P_B^{Eq} / (\sigma_a \phi_0 P_B^{Eq} + \lambda_X) \quad \cdots \quad \text{Expression (9)}$$

Iodine concentrations $I_T^{Eq}$ and $I_B^{Eq}$ under equilibrium condition in the upper and lower halves of the reactor core are calculated using relative powers $P_T^{Eq}$ and $P_B^{Eq}$ under equilibrium condition in the upper and lower halves of the reactor core using the following Expressions (10) and (11).

$$I_T{}^{Eq} = y_I \Sigma_f \phi_0 P_T{}^{Eq} / \lambda_I \quad \cdots \text{ Expression (10)}$$

$$I_B{}^{Eq} = y_I \Sigma_f \phi_0 P_B{}^{Eq} / \lambda_I \quad \cdots \text{ Expression (11)}$$

While xenon concentrations $X_T$ and $X_B$ in the upper and lower halves of the reactor core are given by the above Expressions (8) and (9), their corresponding power levels $P_{TX}$ and $P_{BX}$ are calculated by the axial offset calculation unit 52. Consequently, $AO_X$ can be determined by the following Expression (12).

$$AO_X = (P_{TX} - P_{BX}) / (P_{TX} + P_{BX}) = (y_I + y_x) \Sigma_f (X_T - X_B) / \{ (y_I + y_x) \Sigma_f (X_T - X_B) - 2\sigma_a X_T X_B \} \quad \cdots \text{ Expression (12)}$$

Likewise, $AO_I$ can be calculated by the following Expression (13).

$$AO_I = (P_{TI} - P_{BI}) / (P_{TI} + P_{BI}) = (I_T - I_B) / (I_T + I_B) \quad \cdots \text{ Expression (13)}$$

The parameter calculation unit 53 calculates a parameter $DAO_{PX}$ and a parameter $DAO_{IX}$. Specifically, the parameter calculation unit 53 acquires $AO_P$, $AO_X$ and $AO_I$ from the axial offset calculation unit 52 to calculate a parameter $DAO_{PX}$ ($=AO_P - AO_X$) and a parameter $DAO_{IX}$ ($=AO_I - AO_X$). The parameter $DAO_{PX}$ is a xenon parameter represented by using a difference between $AO_P$ and $AO_X$, and the parameter $DAO_{IX}$ is an iodine parameter represented by using a difference between $AO_I$ and $AO_X$.

Although $DAO_{PX}$ and $DAO_{IX}$ are used as the xenon parameter and the iodine parameter, respectively, in the present embodiment, values obtained by multiplying $DAO_{PX}$ and $DAO_{IX}$ by the total relative output P of the reactor 10 can be used as the xenon parameter and the iodine parameter instead. In this case, the xenon parameter becomes $DAO_{PX} \times P = \{(P_T - P_B) / (P_T + P_B) - (P_{TX} - P_{BX}) / (P_{TX} + P_{BX}) \} \times P$, and the iodine parameter becomes $DAO_{IX} \times P = \{(P_{TI} - P_{BI}) / (P_{TI} + P_{BI}) - (P_{TX} - P_{BX})/(P_{TX} + P_{BX})\} \times P$.

Because $P = (P_T + P_B) = (P_{TX} + P_{BX}) = (P_{TI} + P_{BI})$, the xenon parameter $DAO_{PX} \times P$ becomes $(P_T - P_B) - (P_{TX} - P_{BX})$, and the iodine parameter becomes $(P_{TI} - P_{BI}) - (P_{TX} - P_{BX})$ That is, the xenon parameter $DAO_{PX} \times P$ is a difference between the core axial offset of the power distribution $(P_T - P_B)$ and the xenon-corresponding core axial offset of the power distribution $(P_{TX} - P_{BX})$ (Expression (1) - Expression (2)). The iodine parameter $DAO_{IX} \times P$ is a difference between the iodine-corresponding core axial offset of the power distribution $(P_{TI} - P_{BI})$ and the xenon-corresponding core axial-direction output-distribution offset $(P_{TX} - P_{BX})$ (Expression (3) - Expression (2)). Because using $DAO_{PX} \times P$ as the xenon parameter and $DAO_{IX} \times P$ as the iodine parameter can give a generality with respect to the output change of the reactor 10, it is possible to monitor the reactor 10 on a steady basis even when the output of the reactor 10 is not constant.

In a case where load following operation changes power, a control method of this embodiment must be modified. Consequently, the calculation of $AO_X$ needs special consideration.

First of all, because the above Expressions (4) and (5) include terms of products of powers $P_T$ and $P_B$ and xenon concentrations $X_T$ and $X_B$, a change in xenon concentration is nonlinear to the power of each region of a reactor core 12. Therefore, as shown in an expression of xenon concentration under equilibrium condition and power (the above Expressions (8) and (9)), xenon concentration under equilibrium condition is asymptotic to $(y_I + y_X) \Sigma_f / \sigma_a$ as a power increases.

If xenon concentration approaches the asymptotic value, a power obtained by inverse calculation from this value can be infinite value. For instance, such xenon concentration can be found when the power is reduced from a rated power to a partial power. Specifically, $AO_X$ obtained using the above Expression (12) can be significantly large and can significantly deviate from a value obtained under actual operating conditions. The trajectory would be divergent in this case.

The above problem can be solved by defining $AO_X$ as an axial offset of the axial power distribution which would give the current xenon offset ($X_r$) under equilibrium condition at the operating core power.
Xenon offset $X_r$ is defined by the following expression.

$$X_r = (X_T - X_B) / (X_T + X_B) \quad \cdots \quad \text{Expression (14)}$$

S By substituting the above Expressions (8) and (9) for the above Expression (14),

$$X_r = \lambda_X (P_T - P_B) / \{\lambda_X (P_T + P_B) + 2\sigma_a \phi_0 P_T P_B\} \quad \cdots \quad \text{Expression (15)}$$

By definition, $P_T$ and $P_B$ are expressed by the following expressions.

$$P_T = P(1 + AO_X) \quad \cdots \quad \text{Expression (16)}$$

$$P_B = P(1 - AO_X) \quad \cdots \quad \text{Expression (17)},$$

where
Here, P is the operating power which is obtained as measured value. By the above-mentioned definition, P is calculated from $P_{TX}$ and $P_{BX}$ obtained by inverse operation from xenon concentration, resulting in a difference from actual power.

By substituting the above Expressions (16) and (17) for the above Expression (15) to solve $AO_X$, the $AO_X$ is determined by the following Expression (18). Using the Expression (18), a control method of this embodiment can be applied under any operational conditions.

$$AO_X = \{-1 + \sqrt{(1 - 4AC)}\} / 2A \quad \cdots \quad \text{Expression (18)},$$

where

$$A = \sigma_a \phi_0 P X_r / \lambda_X,$$

and

$$C = -X_r - A.$$

The trajectory display unit 54 displays a trajectory obtained by plotting the parameters ($DAO_{PX}$ and $DAO_{IX}$) (plot trajectory) and the allowable range trajectory drawn by a trajectory of the allowable ranges ($DAO_{PX\_L}$ and $DAO_{IX\_L}$) of the parameters ($DAO_{PX}$ and $DAO_{IX}$) on the display unit 2. Specifically, the trajectory display unit 54 acquires the allowable ranges ($DAO_{PX\_L}$ and $DAO_{IX\_L}$) stored in the control-information storage unit 42 of the storage unit 4 and displays a trajectory obtained by setting the allowable range ($DAO_{PX\_L}$) on the X-axis (horizontal axis that is one axis) and the allowable range ($DAO_{IX\_L}$) on the Y-axis (vertical axis that is the other axis) in the Cartesian coordinate system on the display unit 2. At the same time, the trajectory display unit 54 acquires the parameters ($DAO_{PX}$ and $DAO_{IX}$) calculated by the parameter calculation unit 53, and displays a plot trajectory obtained by setting the parameter ($DAO_{PX}$) on the X-axis (horizontal axis that is one axis) and the parameter ($DAO_{IX}$) on the Y-axis (vertical axis that is the other axis) in the Cartesian coordinate system on the display unit 2.

When $\Delta I$ shown in the expression (1) is used as the core axial offset of the power distribution, the trajectory display unit 54 displays a trajectory obtained by plotting values ($DAO_{PX} \times P$ and $DAO_{IX} \times P$) obtained by multiplying each of the parameters ($DAO_{PX}$ and $DAO_{IX}$) by the total relative output P (plot trajectory) on the display unit 2. Specifically, the trajectory display unit 54 acquires the parameters ($DAO_{PX} \times P$ and $DAO_{IX} \times P$) calculated by the parameter calculation unit 53, and displays a plot trajectory obtained by setting the parameter ($DAO_{PX} \times P$) on the X-axis (horizontal axis that is one axis) and the parameter ($DAO_{IX} \times P$) on the Y-axis (vertical axis that is the other axis) in the Cartesian coordinate system on the display unit 2. Similarly, the trajectory display unit 54 displays the allowable range ($DAO_{PX\_L}$) and the allowable range ($DAO_{IX}$_L) by multiplexing each of the allowable ranges by the total relative output P on the display unit 2. However, the method of displaying the trajectory is not limited to this method and, for example, a trajectory obtained by setting the parameter $DAO_{PX}$ or $DAO_{PX}$ v P on the Y-axis and the parameter $DAO_{IX}$ or $DAO_{IX} \times P$ on the X-axis in the Cartesian coordinate system can be displayed instead.

In the Cartesian coordinate system, the parameter ($DAO_{PX}$) and the allowable range ($DAO_{PX}$_L) are displayed on the same axis (X-axis) and the parameter ($DAO_{IX}$) and the allowable range ($DAO_{IX}$_L) are displayed on the same axis (Y-axis). However, the method of displaying the trajectory is not limited to this method and, for example, a trajectory obtained by setting the parameter ($DAO_{PX}$) and the allowable range ($DAO_{PX}$_L) on the Y-axis and the parameter ($DAO_{IX}$) and the allowable range ($DAO_{IX}$_L) on the X-axis in the Cartesian coordinate system can be displayed instead.

It is known that a plot trajectory of parameters ($DAO_{PX}$, $DAO_{IX}$) involves the characteristics in the following (1) to (5).

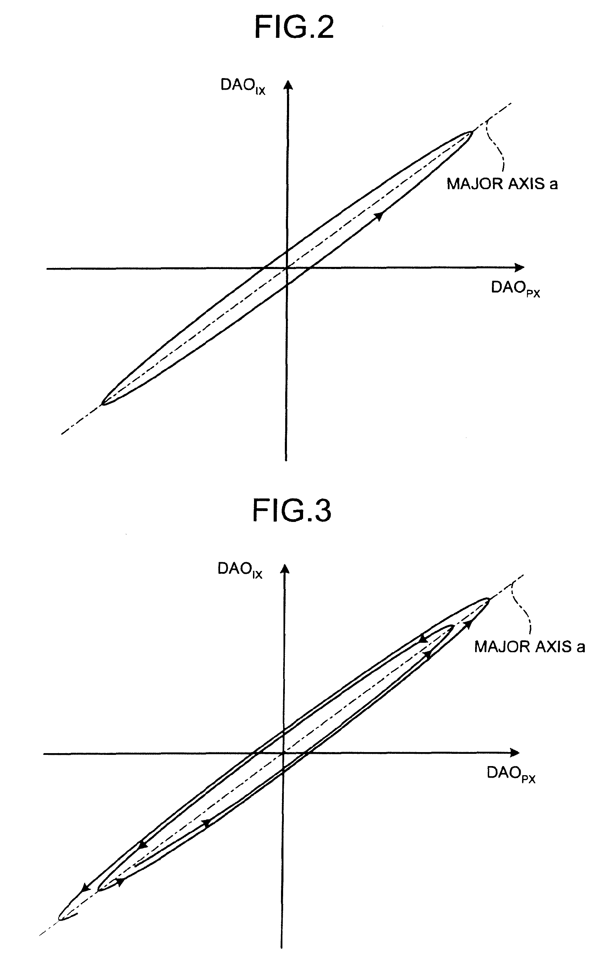

(1) In a case where xenon oscillation is stable, a trajectory is expressed by a flat ellipse centering on the origin, as shown in Figure 2. The major axis a of the ellipse, which lies in the first and third quadrants, inclines at a fixed angle (approximately 36 degrees) to a horizontal axis independent from the amplitude of a xenon oscillation.

(2) In the trajectory, the plot point always moves counterclockwise and around the origin with one-cycle of xenon oscillation (about 30 hours). Specifically, the larger the distance of the plot point is from the major axis a of the ellipse, the higher the speed of progress on ellipse becomes.

(3) In a case where xenon oscillation is divergent, an elliptic spiral becomes larger as shown in Figure 3, and if xenon oscillation is convergent, an elliptic spiral becomes smaller and converges on the origin.

(4) When the control rod 13 is inserted into the reactor core 12 stepwise, the trajectory moves to the negative side in parallel with the horizontal axis, and when the control rod 13 is withdrawn, the trajectory moves to the positive side in parallel with the horizontal axis. After the control rod 13 stops, the trajectory will be formed as another ellipse having characteristics of the above (1) to (3).

(5) When the trajectory stays at the origin (under the condition of $AO_P = AO_X = AO_I$), the xenon oscillation is suppressed.

The allowable ranges ($DAO_{PX}$_L and $DAO_{IX}$_L) of the parameters ($DAO_{PX}$ and $DAO_{IX}$) are obtained in such a manner that, by a safety analysis of the core 12, its result is enveloped, based on the axial-direction output-distribution offsets $AO_P$, $AO_X$, and $AO_I$ that can be taken within a limited range of the $AO_P$ with which the safety of the core 12 is secured. In this manner, the allowable ranges ($DAO_{PX}$_L and $DAO_{IX}$_L) are determined by the characteristics of the core 12 to be consistent with the safety analysis of the core 12, and set in a range with which an influence of the xenon oscillation that is caused by a change of the output in the axial direction of the core 12 is suppressed and the safety of the core 12 is secured. The obtained allowable ranges ($DAO_{PX}$_L and $DAO_{IX}$_L) are stored in the control-information storage unit 42 of the storage unit 4, and read out by the arithmetic processing unit 5 as appropriate. When the trajectory display unit 54 displays the allowable ranges ($DAO_{PX}$_L and $DAO_{IX}$_L) on the display unit 2, a allowable range is drawn around the origin. In the present embodiment, the axial power distribution in the reactor 10 is controlled such that the parameters ($DAO_{PX}$ and $DAO_{IX}$) do not exceed this allowable range.

The allowable range $DAO_{PX}$_L is an allowable range of a xenon parameter, and the allowable range $DAO_{IX}$_L is a allowable range of an iodine parameter. When using the $DAO_{PX} \times P$ as the xenon parameter and the $DAO_{IX} \times P$ as the iodine parameter, a value obtained by multiplying the allowable range $DAO_{PX}$_L by the total relative output P becomes the allowable range of the xenon parameter, and a value obtained by multiplying the allowable range $DAO_{IX}$_L by the total relative output P becomes the allowable range of the iodine parameter.

The allowable range determining unit 55 determines whether the parameters ($DAO_{PX}$ and $DAO_{IX}$) exceed the allowable ranges ($DAO_{PX}$_L and $DAO_{IX}$_L). Specifically, the allowable range determining unit 55 compares the parameter $DAO_{PX}$ and the parameter $DAO_{IX}$ calculated by the parameter calculation unit 53 with the allowable range ($DAO_{PX}$_L) and the allowable range ($DAO_{IX}$_L), respectively. When at least one of a fact that the parameter $DAO_{PX}$ exceeds the allowable range ($DAO_{PX}$_L) and a fact that the parameter $DAO_{IX}$ exceeds the allowable range ($DAO_{IX}$_L) is established, the allowable range determining unit 55 determines that the parameters ($DAO_{PX}$ and $DAO_{IX}$) exceed the allowable ranges ($DAO_{PX}$_L and $DAO_{IX}$_L). In this case, the allowable range determining unit 55 is configured to output a signal indicating that the parameters ($DAO_{PX}$ and $DAO_{IX}$) exceed the allowable ranges ($DAO_{PX}$_L and $DAO_{IX}$_L) (warning signal) to at least one of the control-rod moving unit 56 and the alarming unit 57.

The control-rod moving unit 56 performs a movement control, such as inserting, drawing, and stopping, of the core of the control rod 13 by controlling the control rod driving mechanism 14. In the present embodiment, an operator monitors the allowable range trajectory displayed on the display unit 2 and the parameters ($DAO_{PX}$ and $DAO_{IX}$) at the current time calculated by the parameter calculation unit 53. During the monitoring, for example, when the parameters ($DAO_{PX}$ and $DAO_{IX}$) are about to exceed the allowable range trajectory (that is, before the parameters ($DAO_{PX}$ and $DAO_{IX}$) exceed the allowable ranges ($DAO_{PX}$_L and $DAO_{IX}$_L)), the operator performs an operation to move the control rod 13 via the input unit 3. With this configuration, the axial power distribution in the reactor 10 can be controlled before the xenon oscillation increases, and as a result, it is possible to suppress the xenon oscillation in a rapid manner. Alternatively, the control-rod moving unit 56 can be configured to move the control rod 13 upon receiving the signal indicating that the parameters ($DAO_{PX}$ and $DAO_{IX}$) exceed the allowable ranges ($DAO_{PX}\_L$ and $DAO_{IX}\_L$) from the allowable range determining unit 55.

The alarming unit 57 makes a warning that $AO_P$ has exceeded the allowable range. In the present embodiment, the alarming unit 57 changes a display color of the plot point drawn by the trajectory display unit 54 upon acquiring an output signal indicating that $AO_P$ has exceeded the allowable range from the allowable range determining unit 55. For example, when the plot point at the normal time (when the parameters ($DAO_{PX}$ and $DAO_{IX}$) are within the allowable ranges ($DAO_{PX}\_L$ and $DAO_{IX}\_L$)) is displayed in blue, the alarming unit 57 issues a warning to an operator of the reactor 10 by displaying the plot point in an eye-catching color that differs from blue, such as red. When the warning is issued by the alarming unit 57, the operator can perform an operation to move the control rod 13 via the input unit 3. In this case, the control-rod moving unit 56 is configured to acquire operation information (moving direction and moving amount) input from the input unit 3 and to output a driving signal corresponding to the operation to the control rod driving mechanism 14. The method of issuing the warning by the alarming unit 57 is not limited to this method and, for example, a warning message can be displayed on the display unit 2 in a separate manner or a warning can be issued from an audio output unit.

In this embodiment, the control rod 13 may be moved so that a plot point of the ellipse trajectory indicated on the display unit 2 is guided to the major axis of the ellipse. In fact, this method for operating a control rod is invented by this inventor based on unconventional findings. This inventor found that $AO_P$ is constant in case of a plot point lying on the major axis of the ellipse trajectory.

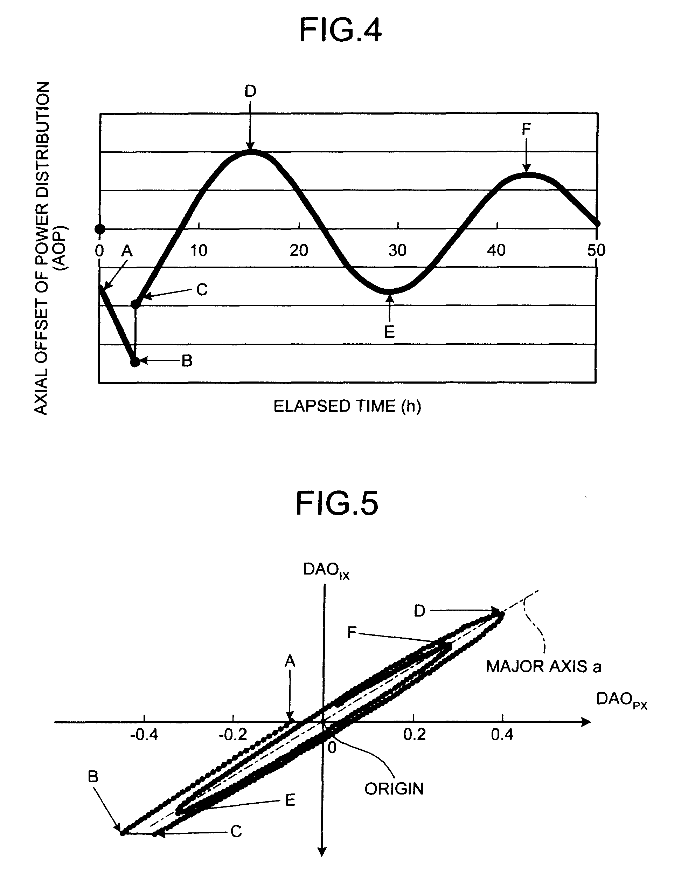

The above findings will be described in more detail with reference to the drawings. Figure 4 is a graph showing $AO_P$ of the reactor core 12 when xenon oscillation is induced by inserting the control rod 13 into the reactor core 12 (origin to point A), maintaining the state for a certain period of time (points A to B) and withdrawing the control rod 13 (points B to C) to give disturbance. Figure 5 is a graph showing a plot trajectory of parameters ($DAO_{PX}$, $DAO_{IX}$) corresponding to Figure 4.

As shown in Figure 4, when $AO_P$ oscillates with a predetermined cycle which can produce xenon oscillation, its rate of change or tangential inclination is 0 at poles (D, E, F). Meanwhile, these poles (D, E, F) lie on the major axis of an ellipse formed by the trajectory of said parameters in Figure 5. In a case where a plot point lies on the major axis of an ellipse formed by the trajectory of said parameters, $AO_P$ is constant. When a plot point deviates from the major axis a, $AO_P$ can constantly change, indicating a growing xenon oscillation.

The parameter $DAO_{PX}$ is defined as ($AO_P-AO_X$), and the major axis a and minor axis of an ellipse formed by the trajectory of said parameters is proportional to $AO_P$ (expressed as amplitude in Figure 4). Consequently, from the above characteristic (4), the major axis a of the ellipse trajectory is shortened to reduce the $AO_P$, only by guiding a plot point to the major axis a of an ellipse formed by the trajectory of said parameters. Soon after the trajectory progresses, an ellipse formed by the trajectory of said parameters is drawn with reduced major axis and minor axis, thereby suppressing xenon oscillation.

In a case where the control rod 13 is moved, a plot point is preferably moved to the major axis, but may be as close as possible. As a result, since the rate of change in $AO_P$ becomes a minimum level, it is possible to suppress xenon oscillation. As long as no other disturbance is observed, xenon oscillation develops with smaller amplitude after the plot point is moved, thereby making the plot point gradually approach the origin and inevitably suppressing xenon oscillation.

In this embodiment, the control rod 13 is manually operated by an operator, but this invention is not limited thereto. The control rod moving unit 56 may automatically control the control rod 13. In this case, the control rod moving unit 56 acquires an alarm signal from the allowable range determining unit 55 to calculate a distance on X axis from the current plot point to the major axis of the ellipse trajectory. Based on the distance, a movement volume of the control rod 13 is calculated and an operation signal of inserting the control rod 13 by the steps is given to the control rod driving mechanism 14. Also in this case, the control-rod moving unit 56 performs a movement control of the control rod in such a manner that the plot point is induced toward the major axis of the ellipse. Since the relationship between motion steps of the control rod 13 and motion steps of a plot point varies with time, arithmetic processing is executed in accordance with conditions corresponding thereto.

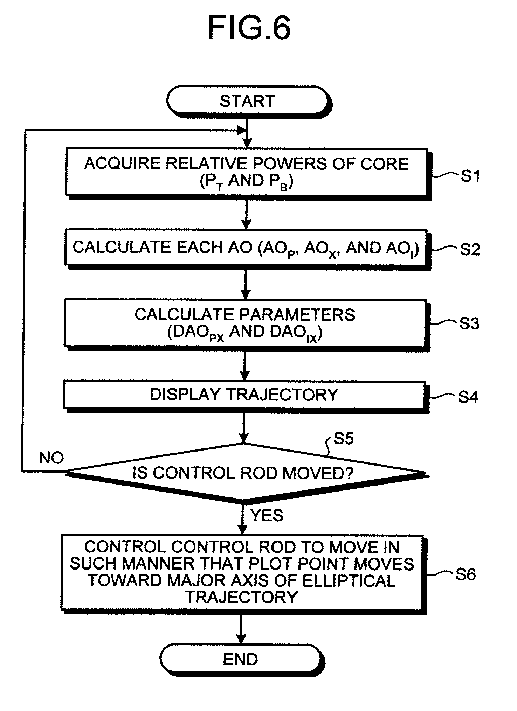

The axial power distribution control method according to the present embodiment is explained next with reference to FIGS. 6 to 8. The axial power distribution control method according to the present embodiment is realized by the axial power distribution control device 1 executing the axial power distribution control program 1a according to the present embodiment. When controlling a pressured water reactor, at Step S1, the relative power acquisition unit 51 of the axial power distribution control device 1 acquires the upper-half relative output ($P_T$) and the lower-half relative output ($P_B$) from the nuclear instrumentation system 16.

Thereafter, the process proceeds to Step S2, and the axial offset calculation unit 52 calculates the axial offsets of the power distribution $AO_P$, $AO_X$, and $AO_I$ based on $P_T$ and $P_T$ acquired by the relative power acquisition unit 51 by using the relational expressions (1) to (3) (axial offset of the power distribution calculating step). At Step S3, the parameter calculation unit 53 calculates the parameter $DAO_{PX}$ and the parameter $DAO_{IX}$ from the axial offsets of the power distribution $AO_P$, $AO_X$, and $AO_I$ calculated by the axial offset calculation unit 52 (parameter calculating step).

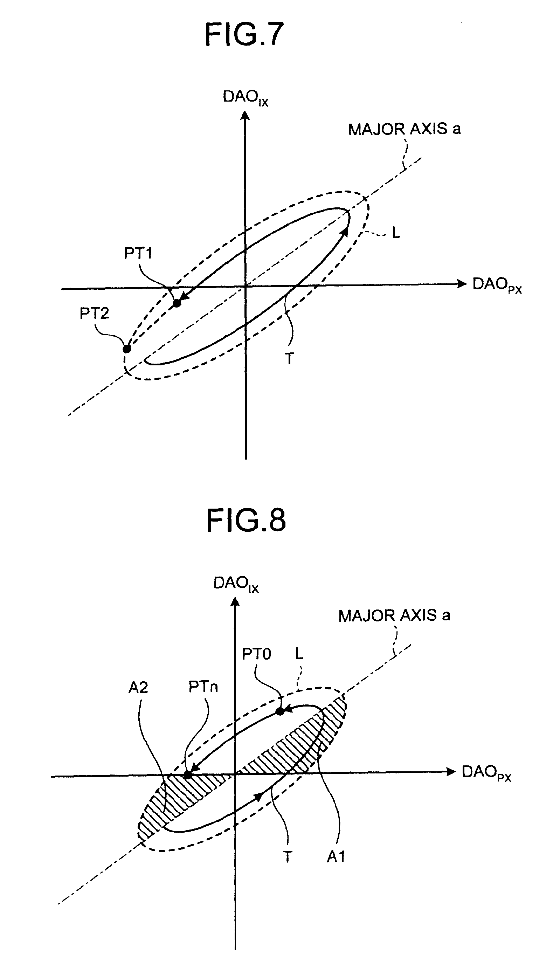

Thereafter, the process proceeds to Step S4, and the trajectory display unit 54 acquires a allowable range trajectory from the control-information storage unit 42 and displays it on the display unit 2 (a dotted line L shown in FIG. 7), and at the same time, displays a plot point representing the parameters ($DAO_{PX}$ and $DAO_{IX}$) calculated by the parameter calculation unit 53 on the display unit 2 (trajectory display step). A trajectory of the plot point of the parameters ($DAO_{PX}$ and $DAO_{IX}$) is a solid line T in FIG. 7, which makes an ellipse (elliptical trajectory) by moving around the origin O. The major axis a of the ellipse drawn by the plot point of the parameters ($DAO_{PX}$ and $DAO_{IX}$) moving around the origin O is a dashed-dotted line in FIG. 7.

Thereafter, the process proceeds to Step S5, and it is determined whether to move the control rod 13. In the present embodiment, an operator compares the latest plot point of the parameter $DAO_{PX}$ and the parameter $DAO_{IX}$ displayed on the display unit 2 with the allowable range trajectory L of the allowable ranges ($DAO_{PX\_}L$ and $DAO_{IX\_}L$). When at least one of the parameter $DAO_{PX}$ and the parameter $DAO_{IX}$ at the current time, that is, the latest values is about to exceed at least one of the allowable range $DAO_{PX\_}L$ and the allowable range $DAO_{IX\_}L$ (when the latest plot point is about to exceed the allowable range trajectory L) or when exceeded (when the latest plot point exceeded the allowable range trajectory L), it is determined to move the control rod 13. In the determination whether to move the control rod 13 at Step S5, the case where the latest plot point exceeded the allowable range trajectory L has a priority over the case where the latest plot point is about to exceed the allowable range trajectory L.

When a result of the determination is "NO" at Step S5, controls from Step S1 to Step S5 are repeated. In this case, because the trajectory display unit 54 displays the plot point indicating the parameters ($DAO_{PX}$ and $DAO_{IX}$) on the display unit 2 at Step S4, a trajectory of the plot point is displayed on the display unit 2 at predetermined time intervals. Once the allowable range trajectory L is displayed on the display unit 2, the display of the allowable range trajectory is continued as it is from then on.

On the other hand, when the result of the determination is "YES" at Step S5, that is, when the latest plot point is about to exceed the allowable range trajectory L (PT1 in FIG. 7) or when exceeded (PT2 in FIG. 7), the process proceeds to Step S6, and the operator performs an operation to move the control rod 13 from the input unit 3 (control-rod moving step). In the present embodiment, the operator operates the control rod 13 in such a manner that the latest plot point of the parameters ($DAO_{PX}$ and $DAO_{IX}$) displayed on the display unit 2 moves toward the major axis a of the elliptical trajectory.

With this configuration, because the change rate of the core axial offset of the power distribution $AO_P$ is minimized as long as there is no other disturbance, it is possible to suppress the xenon oscillation. In addition, because the xenon oscillation makes a progress in a direction with which the amplitude is decreased after moving the plot point, even if it is left unattended after that, the plot point approaches the origin O, and the xenon oscillation progresses toward a direction of being naturally extinguished. After performing the movement control of the control rod 13, the process returns to START, and monitoring the operation state of the reactor 10 is continued.

The major axis a of the elliptical trajectory is the major axis a of the ellipse formed by a trajectory of the plot point of the parameters ($DAO_{PX}$ and $DAO_{IX}$) calculated by the parameter calculation unit 53. Because the major axis of the ellipse exists at the first quadrant and the third quadrant, which is inclined at a predetermined angle (around 36 degrees) to the horizontal axis regardless of a magnitude of the xenon oscillation as described above, the allowable range trajectory L becomes an ellipse of which the major axis exists at the first quadrant and the third quadrant, in the same manner as the elliptical trajectory of the plot point of the parameters ($DAO_{PX}$ and $DAO_{IX}$). Therefore, at Step S6, the control rod 13 can be operated in such a manner that the latest plot point of the parameters ($DAO_{PX}$ and $DAO_{IX}$) moves toward the major axis of the allowable range trajectory L.

When the latest plotting point is about to exceed the allowable range trajectory L (PT1 in FIG. 7), it is preferable to move the control rod 13 in such a manner that the latest plot point of the parameters ($DAO_{PX}$ and $DAO_{IX}$) moves toward the major axis a of the ellipse when the plot point of the trajectory enters areas A1 and A2 that are surrounded by the X-axis, the major axis a of the ellipse, and the allowable range trajectory L. For example, because the plot point PT0 is not in the areas A1 and A2, it is preferable to perform the operation to move the control rod 13 after the latest plot point PTn enters the area A2 after an elapse of time. With this configuration, because an unnecessary operation, such as an over-drawing or an over-inserting of the control rod 13, can be avoided, it is possible to suppress the xenon oscillation in a more rapid manner. The areas A1 and A2 include points on the X-axis, on the major axis a of the ellipse, and on the allowable range trajectory L.

When the control rod 13 is controlled by the control-rod moving unit 56 in an automatic manner, at Step S5, the allowable range determining unit 55 determines whether at least one of the latest parameter $DAO_{PX}$ and the latest parameter $DAO_{IX}$ exceeded at least one of the allowable range $DAO_{PX\_}L$ and the allowable range $DAO_{IX\_}L$. As a result of the determination, when the allowable range determining unit 55 determines that the latest parameter exceeded the allowable range, the control-rod moving unit 56 acquires a warning signal output from the allowable range determining unit 55, and calculates a distance in the X-axis direction from the current plot point to the major axis a of the elliptical trajectory. The control-rod moving unit 56 then calculates a moving amount of the control rod 13 based on the distance, and outputs an operation signal to insert the control rod by the moving amount to the control rod driving mechanism 14.

Alternatively, an operator can operate the control rod 13 based on the warning from the alarming unit 57. In this case, the allowable range determining unit 55 determines whether at least one of the latest parameter $DAO_{PX}$ and the latest parameter $DAO_{IX}$ exceeded at least one of the allowable range $DAO_{PX\_}L$ and the allowable range $DAO_{IX\_}L$. When the allowable range determining unit 55 determines that the latest parameter exceeded the allowable range, the alarming unit 57 makes a warning indicating the fact by, for example, displaying the latest plot point in a different display color. With this configuration, the operator can visually confirm that the latest parameters ($DAO_{PX}$ and $DAO_{IX}$) exceeded the allowable range in an easy manner, and can securely determine the timing for operating the control rod 13. The operator who figured out that the latest parameters ($DAO_{PX}$ and $DAO_{IX}$) exceeded the allowable range performs an operation to move the control rod 13 from the input unit 3.

The above-mentioned embodiment includes the following advantages,

1. Control of an axial power distribution in a nuclear reactor 10 can sufficiently control a xenon oscillation, thereby suppressing the xenon oscillation to an extremely small magnitude in advance to ensure the safety of control of a nuclear reactor at the same time.

2. Movement timing and movement distance of the control rod 13 can be readily viewed to easily and assuredly operate the control rod 13 and plan clear-cut reactor control strategy.

3. By comparing the latest plot point of the parameters ($DAO_{PX}$ and $DAO_{IX}$) with the allowable range trajectory L simultaneously on the same display unit 2, it is possible to move the control rod 13 not only when the latest plot point exceeded the allowable range trajectory L but also before the latest plot point exceed the allowable range trajectory L. This makes it possible to control the xenon oscillation in a more rapid manner by controlling the axial power distribution in the reactor even when the latest plot point possibly exceeds the allowable range trajectory L.

Industrial Applicability

As described above, the axial power distribution control method and the axial power distribution control supporting device according to the present invention are effective in controlling output distribution in an axial direction of a reactor.

Reference Signs List

| | |
|---|---|
| 1 | Axial power distribution control device |
| 1a | Axial power distribution control program |
| 2 | display unit |
| 3 | input unit |
| 4 | storage unit |
| 5 | arithmetic processing unit |
| 10 | reactor |
| 11 | pressure vessel |
| 12 | core |
| 13 | control rod |
| 14 | control rod driving mechanism |
| 15a | ex-core neutron-flux detector |
| 15b | in-core neutron-flux detector |
| 16 | nuclear instrumentation system |
| 41 | program storage unit |
| 42 | control-information storage unit |
| 51 | relative power acquisition unit |
| 52 | axial offset calculation unit |
| 53 | parameter calculation unit |
| 54 | trajectory display unit |
| 55 | allowable range determining unit |
| 56 | control-rod moving unit |
| 57 | alarming unit |

**Claims**

1. An axial power distribution control method, comprising:

an axial offset calculation step of calculating an axial offset of the current power distribution ($AO_P$), an axial offset of the power distribution which would give the current xenon distribution under equilibrium condition (xenon-corresponding axial offset of the power distribution: $AO_X$), and an axial offset of the power distribution which would give the current iodine distribution under equilibrium condition (iodine-corresponding axial offset of the power distribution: $AO_I$), using the following expressions (1) to (3) or (1)' to (3)', respectively, based on a relative power ($P_T$) in the upper half of the nuclear reactor core and a relative power ($P_B$) in the lower half of the nuclear reactor core;

a parameter calculating step of calculating a xenon parameter represented by using a difference between $AO_P$ and $AO_X$ during an operation of the reactor and an iodine parameter represented by using a difference between $AO_I$ and $AO_X$ during the operation of the reactor;

a control rod moving step of controlling the movement of a control rod in such a manner that the xenon parameter and the iodine parameter move toward a major axis of an ellipse drawn by the xenon parameter and the iodine parameter which are calculated in the parameter calculating step, based on the allowable xenon parameter range and the allowable iodine parameter range required to ensure the safety of the core, and the xenon parameter and the iodine parameter which are calculated in the parameter calculating step.

$$AO_P: \ (P_T - P_B) \ \text{or} \ (P_T - P_B)/(P_T + P_B) \ \cdots \ \text{Expression (1)}$$

$$AO_X: \ (P_{TX} - P_{BX}) \ \text{or} \ (P_{TX} - P_{BX})/(P_{TX} + P_{BX}) \ \cdots \ \text{Expression (2)}$$

$$AO_I: \ (P_{TI} - P_{BI}) \ \text{or} \ (P_{TI} - P_{BI})/(P_{TI} + P_{BI}) \ \cdots \ \text{Expression (3)}$$

$$AO_P: \ (P_T - P_B)/(P_T + P_B) \ \cdots \ \text{Expression (1)'}$$

$$AO_X: \ (P_{TX} - P_{BX})/(P_{TX} + P_{BX}) \ \cdots \ \text{Expression (2)'}$$

$$AO_I: \ (P_{TI} - P_{BI})/(P_{TI} + P_{BI}) \ \cdots \ \text{Expression (3)'},$$

where

$P_{TX}$: relative power in the upper half of the core that would give the current xenon concentration under equilibrium condition,
$P_{BX}$: relative power in the lower half of the core that would give the current xenon concentration under equilibrium condition,
$P_{TI}$: relative power in the upper half of the core that would give the current iodine concentration under equilibrium condition, and
$P_{BI}$: relative power in the lower half of the core that would give the current iodine concentration under equilibrium condition.

2. An axial power distribution control method according to claim 1, comprising: a trajectory display step, which is executed after the parameter calculating step and before the control-rod moving step including,
displaying an allowable range, which is determined based on the allowable range for both the xenon parameter and the iodine parameter, on a display unit in a Cartesian coordinate system, and

displaying a trajectory of xenon parameter calculated at the parameter calculating step on the one axis and iodine parameter calculated at the parameter calculating step on the other axis on the display unit.

3. An axial power distribution control method according to claim 2, comprising: the control-rod moving step which performs a movement of the control rod in such a manner that the xenon parameter and the iodine parameter move toward the major axis of the ellipse before at least one of these parameters that are calculated at the parameter calculating step exceeds at least one of the allowable range for the xenon parameter and the iodine parameter.

4. An axial power distribution control method according to claim 3, comprising: the control-rod moving step, in a case where the allowable range for the xenon parameter is set on a horizontal axis and the allowable range for the iodine parameter is set on a vertical axis in the Cartesian coordinate system, performing the movement of the control rod in such a manner that the xenon parameter and the iodine parameter move toward the major axis of the ellipse when the xenon parameter and the iodine parameter enter areas that are bounded by the horizontal axis, the major axis of the ellipse, and the allowable range shown by the ellipse.

5. An axial power distribution control method according to claim 1 or 2, comprising: an allowable range excess determination step, which is executed before the control-rod moving step, determining whether at least one of the xenon parameter and the iodine parameter calculated at the parameter calculating step exceeds at least one of the allowable range for the xenon parameter and the allowable range of the iodine parameter, when at least one of the xenon parameter and the iodine parameter exceeds at least one of the allowable range for the xenon parameter and the iodine parameter, the control-rod moving step performs the movement of the control rod in such a manner that the xenon parameter and the iodine parameter move toward the major axis of the ellipse drawn by the xenon parameter and the iodine parameter.

6. An axial power distribution control method according to claim 5, comprising: a alarming step which alarms when it is determined that at least one of the xenon parameter and the iodine parameter exceeds at least one of the allowable range for the xenon parameter and the iodine parameter in the allowable range excess determination step.

7. An axial power distribution control supporting device comprising:

an axial offset calculation unit of calculating an axial offset of the current power distribution ($AO_P$), an axial offset of the power distribution which would give the current xenon distribution under equilibrium condition (xenon-corresponding axial offset: $AO_X$), and an axial offset of the power distribution which would give the current iodine distribution under equilibrium condition (iodine-corresponding axial offset: $AO_I$), using the following expressions (1) to (3) or (1)' to (3)', respectively, based on a relative power ($P_T$) in the upper half of the nuclear reactor core and a relative power ($P_B$) in the lower half of the nuclear reactor core; a parameter calculating unit of calculating a xenon parameter represented by using a difference between $AO_P$ and $AO_X$ during an operation of the reactor and an iodine parameter represented by using a difference between $AO_I$ and $AO_X$ during the operation of the reactor; a control rod moving unit of controlling the movement of a control rod in such a manner that the xenon parameter and the iodine parameter move toward a major axis of an ellipse drawn by the xenon parameter and the iodine parameter which are calculated in the parameter calculating unit, based on the allowable xenon parameter range and the allowable iodine parameter range required to ensure the safety of the core, and the xenon parameter and the iodine parameter which are calculated in the parameter calculating unit.

$$AO_P: (P_T - P_B) \text{ or } (P_T - P_B)/(P_T + P_B) \cdots \text{Expression (1)}$$

$$AO_X: (P_{TX} - P_{BX}) \text{ or } (P_{TX} - P_{BX})/(P_{TX} + P_{BX}) \cdots \text{Expression (2)}$$

$$AO_I: (P_{TI} - P_{BI}) \text{ or } (P_{TI} - P_{BI})/(P_{TI} + P_{BI}) \cdots \text{Expression (3)}$$

$$AO_P: (P_T - P_B)/(P_T + P_B) \cdots \text{Expression (1)'}$$

$$AO_X: (P_{TX}-P_{BX})/(P_{TX}+P_{BX}) \cdots \text{Expression (2)}'$$

$$AO_I: (P_{TI}-P_{BI})/(P_{TI}+P_{BI}) \cdots \text{Expression (3)}',$$

where

$P_{TX}$: relative power in the upper half of the core that would give the current xenon concentration under equilibrium condition,
$P_{BX}$: relative power in the lower half of the core that would give the current xenon concentration under equilibrium condition,
$P_{TI}$: relative power in the upper half of the core that would give the current iodine concentration under equilibrium condition, and
$P_{BI}$: relative power in the lower half of the core that would give the current iodine concentration under equilibrium condition.

8. An axial power distribution control supporting device according to claim 7, comprising: the control-rod moving unit which performs a movement of the control rod in such a manner that the xenon parameter and the iodine parameter move toward the major axis of the ellipse before at least one of the xenon parameter and the iodine parameter calculated at the parameter calculating unit exceeds at least one of the allowable range for the xenon parameter and the iodine parameter.

# FIG.1

10

CONTROL ROD DRIVING MECHANISM — 14

13

12

11

CORE

15a

15b

NUCLEAR INSTRUMEN- TATION SYSTEM — 16

1

AXIAL POWER DISTRIBUTION CONTROL DEVICE

ARITHMETIC PROCESSING UNIT — 5

2 — DISPLAY UNIT

3 — INPUT UNIT

RELATIVE POWER ACQUISITION UNIT — 51

AXIAL OFFSET CALCULATION UNIT — 52

4

STORAGE UNIT

PROGRAM STORAGE UNIT — 41

AXIAL POWER DISTRIBUTION CONTROL PROGRAM — 1a

CONTROL-INFORMATION STORAGE UNIT — 42

PARAMETER CALCULATION UNIT — 53

TRAJECTORY DISPLAY UNIT — 54

ALLOWABLE RANGE DETERMINING UNIT — 55

CONTROL-ROD MOVING UNIT — 56

ALARMING UNIT — 57

# FIG.2

DAO$_{IX}$

DAO$_{PX}$

MAJOR AXIS a

# FIG.3

DAO$_{IX}$

DAO$_{PX}$

MAJOR AXIS a

EP 2 400 504 A1

# FIG.4

AXIAL OFFSET OF POWER DISTRIBUTION (AOP)

ELAPSED TIME (h)

# FIG.5

# FIG.6

START

ACQUIRE RELATIVE POWERS OF CORE ($P_T$ AND $P_B$) — S1

CALCULATE EACH AO ($AO_P$, $AO_X$, AND $AO_I$) — S2

CALCULATE PARAMETERS ($DAO_{PX}$ AND $DAO_{IX}$) — S3

DISPLAY TRAJECTORY — S4

S5

NO ← IS CONTROL ROD MOVED?

YES

CONTROL CONTROL ROD TO MOVE IN SUCH MANNER THAT PLOT POINT MOVES TOWARD MAJOR AXIS OF ELLIPTICAL TRAJECTORY — S6

END

# FIG.7

# FIG.8

## INTERNATIONAL SEARCH REPORT

| | International application No. |
|---|---|
| | PCT/JP2010/052474 |

**A. CLASSIFICATION OF SUBJECT MATTER**
*G21C17/00*(2006.01)i, *G21C7/08*(2006.01)i

According to International Patent Classification (IPC) or to both national classification and IPC

**B. FIELDS SEARCHED**

Minimum documentation searched (classification system followed by classification symbols)
G21C17/00, G21C7/08

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
|---|---|---|
| A | WO 2008/139933 A1 (Mitsubishi Heavy Industries, Ltd.), 20 November 2008 (20.11.2008), entire text; all drawings (Family: none) | 1-8 |
| A | Yoichiro SHIMAZU, Kenshiro TAKEDA, Monitoring and Control of Radial Xenon Oscillation in PWRs by a Three-Radial-Offset Concept, Journal of Nuclear Science and Technology, 2007, Vol. 44, pp. 155-162 | 1-8 |
| A | JP 2000-121779 A (Mitsubishi Heavy Industries, Ltd.), 28 April 2000 (28.04.2000), entire text; all drawings (Family: none) | 1-8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 March, 2010 (09.03.10) | 16 March, 2010 (16.03.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

EP 2 400 504 A1

**INTERNATIONAL SEARCH REPORT**

International application No.

PCT/JP2010/052474

C (Continuation).  DOCUMENTS CONSIDERED TO BE RELEVANT

| Category* | Citation of document, with indication, where appropriate, of the relevant passages | Relevant to claim No. |
|---|---|---|
| A | JP 7-104092 A  (Mitsubishi Genshiryoku Kogyo Kabushiki Kaisha), 21 April 1995 (21.04.1995), entire text; all drawings (Family: none) | 1-8 |

Form PCT/ISA/210 (continuation of second sheet) (July 2009)

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3202430 B

- JP 2000121779 A

**Non-patent literature cited in the description**

- Load-following operation of PWR. *The Thermal and Nuclear Power,* vol. 31 (2
- Optimum control method for axial-direction xenon oscillation of PWR based on online data processing of axial offset of the power distribution. *Journal of The Atomic Energy Society of Japan,* vol. 33 (3

- Improvement on axial-offset trajectory method for xenon oscillation control in load-following operation. *Journal of The Atomic Energy Society of Japan,* vol. 38 (1